(19) Europäisches Patentamt
European Patent Office
Office européen des brevets

(11) **EP 1 980 374 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
**B25J 9/16** *(2006.01)*

(21) Anmeldenummer: **08103245.0**

(22) Anmeldetag: **31.03.2008**

(54) **Robotersteuerung, Industrieroboter und Verfahren zum Erhalten eines absolutgenauen Modells**

Robot control, industrial robot and method for obtaining an absolutely precise model

Commande de robot, robot industriel et procédé d'obtention d'un modèle absolument précis

(84) Benannte Vertragsstaaten:
**DE IT SE**

(30) Priorität: **13.04.2007 DE 102007017578**

(43) Veröffentlichungstag der Anmeldung:
**15.10.2008 Patentblatt 2008/42**

(73) Patentinhaber: **KUKA Roboter GmbH**
**86165 Augsburg (DE)**

(72) Erfinder: **Weiss, Martin**
**86459, Margertshausen (DE)**

(74) Vertreter: **Patentanwälte**
**Funk & Böss GbR**
**Sigmundstraße 1**
**80538 München (DE)**

(56) Entgegenhaltungen:
**EP-A- 0 262 600      EP-A- 1 612 004**
**DE-A1- 10 233 226      US-A1- 2006 048 364**

**Beschreibung**

Die Erfindung betrifft eine Robotersteuerung, einen Industrieroboter und Verfahren zum Erhalten eines absolutgenauen Modells zum Steuern eines Industrieroboters.

Industrieroboter sind Arbeitsmaschinen, die zur automatischen Handhabung von Objekten mit zweckdienlichen Einrichtungen, z.B. Greifern oder Werkzeugen, ausgerüstet sind und zumindest in einer, üblicherweise in mehreren Bewegungsachsen beispielsweise hinsichtlich Orientierung, Position und Arbeitsablauf programmierbar sind. Roboter weisen üblicherweise programmierbare Robotersteuerungen auf, die während des Betriebs der Roboter deren Bewegungsabläufe steuern. Robotersteuerungen sind u.A. in der EP 1 612 004 A2 offenbart.

Für eine zufriedenstellende Steuerung oder Regelung der Roboter weisen die Steuerungen physikalische Modelle des Roboters auf, wie dies z.B. aus der US 0 262 600 A1 bekannt ist. Die allgemeinen räumlichen Bewegungen des Roboters werden mit einem kinematischen Modell des Roboters beschrieben, das im Wesentlichen die Geometrie des Roboters ohne auf den Roboter wirkende Kräfte oder Momente beschreibt. Durch die eventuell auch lastabhängigen Kräfte oder Momente hervorgerufene Verformungen des Roboters können jedoch dazu führen, dass sich eine Ist-Position des Roboters von seiner Soll-Position unterscheidet.

Für eine verbesserte dynamische Steuerung oder Regelung kann der Roboter auch ein Dynamik-Modell aufweisen, das unter Berücksichtigung von Masseeigenschaften einen Zusammenhang zwischen Koordinaten der Achsen des Roboters, deren Geschwindigkeiten und Beschleunigungen, sowie Kräften und Momenten beschreibt.

Um den eventuell auftretenden Unterschied zwischen einer Ist-Position des Roboters und seiner Soll-Position im kinematischen Modell zumindest zu reduzieren, können für die statischen Positionsfehler die Masseeigenschaften und Elastizitäten des Roboters berücksichtigt werden, wodurch die Absolutgenauigkeit des Roboters verbessert wird. Dies kann mittels eines sogenannten absolutgenauen Modells des Roboters berücksichtigt werden, d.h. ein Modell mit Berücksichtigung von in der Regel exemplarspezifischen statischen Verformungen (und Massen, Längen; dies wird in dieser Erfindung nicht näher behandelt). Absolutgenaue Modelle für den Industrieroboter an sich sind Stand der Technik und sind z.B. in der US 2006/0048364 A1 offenbart.

Insbesondere Elastizitäten in Gelenken und/oder Strukturbauteilen des Roboters können Ursachen für Fehler in der Absolutgenauigkeit des Roboters sein. Aufgrund der Schwerkraft Fertigungstoleranzen kann insbesondere die aufgrund der Programmierung angefahrene Ist-Position des sogenannten Tool Center Points (TCP) von seiner Soll-Position abweichen, wodurch in der Regel sich der TCP tiefer befindet, als vorgesehen. Weitere Einflüsse sind z.B. temperaturbedingte Ausdehnung von Bauteilen des Roboters.

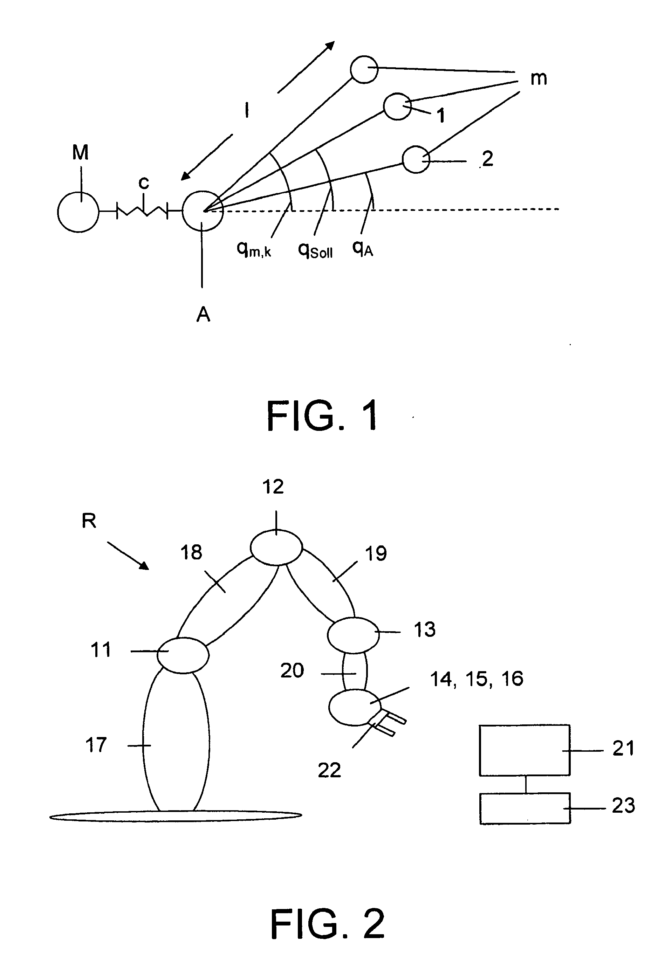

Die Fig. 1 veranschaulicht diese allgemeine Problematik.

Aufgrund der Programmierung eines Industrieroboters sollen dessen Achsen, von denen in der Fig. 1 der Übersicht halber nur eine Achse A dargestellt ist, derart verstellt werden, dass der TCP des Industrieroboters in eine Soll-Position gebracht wird. Die Achse A wird z.B. mittels eines elektrischen Motors M verstellt, der z.B. mittels eines Getriebes oder einer Welle elastisch mit der Achse A verbunden ist. Die Elastizität dieser Verbindung bzw. die Steifigkeit dieser Verbindung ist mit dem Bezugszeichen "c" bezeichnet.

An der Achse A ist exzentrisch in einem Abstand 1 eine Masse m angebracht, die mittels des Motors M in eine Soll-Position 1 bewegt werden soll. Die Masse m ist im vorliegenden Beispiel zumindest annäherungsweise ideal steif an der Achse A befestigt, was in vielen Fällen einer realistischen Modellierung entspricht.

Damit die Masse m ihre Soll-Position 1 anfährt, wird ein Motorwinkel $q_M$ vorgegeben. Bei einer ideal steifen Verbindung zwischen dem Motor M und der Achse A ergäbe dies einen Achsenwinkel $q_{A, theoretisch}$, der gleich dem Motorwinkel $q_M$ ist (bei Annahme einer Getriebeübersetzung $r$=1, andernfalls modifiziert durch die Getriebeübersetzung) und einem Soll-Achswinkel $q_{Soll}$ entspricht, sodass die Masse m ihre Soll-Position 1 einnimmt.

Die Schwerkraft bewirkt jedoch ein Moment, das die Elastizität c verformt, wodurch der real sich einstellende Achswinkel $q_A$ ungleich dem Soll-Achswinkel $q_{soll}$ ist und die Ist-Position 2 der Masse m von ihrer Soll-Position 1 abweicht.

Bei Kenntnis der Steifigkeit c, des Abstands 1 und der Masse m kann die Robotersteuerung aber zum Soll-Achswinkel $q_{soll}$ einen Kompensationswinkel $q_{m,k}$ berechnen, dessen motorseitige Vorgabe genau den Soll-Achswinkel Winkel $q_{soll}$ ergibt. Der Unterschied $q_{m,k}$ - $q_{soll}$ zwischen der Soll-Position 1 und der Ist-Position 2 wird also so berechnet, dass die Verformung aufgrund des Moments zumindest näherungsweise ausgeglichen wird.

Diese Vorgehensweise kann in natürlicher Weise auf Mehrachsroboter übertragen werden.

Industrieroboter sind in der Regel mit einer Befestigungsvorrichtung verbunden, die unter Umständen eine nicht vernachlässigbare Elastizität aufweisen. Dadurch kann der Unterschied zwischen der anzufahrenden Ist-Position und der angefahrenen Soll-Position auch bei einem wie in der Fig. 1 kompensierten Roboter für eine praktische Anwendung zu groß sein.

Die Aufgabe der vorliegenden Erfindung ist es daher, eine verbesserte Robotersteuerung für einen mit einer Komponente, die eine Befestigungsvorrichtung ist, verbundenen Industrieroboter und ein verbessertes Verfahren zum Erhalten eines absolut genauen Modells für die Steuerung eines Industrieroboters anzugeben.

Die Aufgabe der Erfindung wird gelöst durch eine Robotersteuerungsvorrichtung, aufweisend ein absolutgenaues Modell für einen mit der Robotersteuerungsvorrichtung zu steuernden Industrieroboter, der mit wenigstens einer Befestigungsvorrichtung verbunden ist, wobei der Industrieroboter wenigstens eine Achse aufweist und das absolutgenaue Modell eine Verformung des Industrieroboters und eine Verformung der Befestigungsvorrichtung aufgrund der Stellung der wenigstens einen Achse und der Schwerkraft modelliert und kompensiert, wie oben beschrieben.

Die Aufgabe wird auch gelöst durch ein Verfahren zum Erhalten eines absolutgenauen Modells für die Steuerung eines Industrieroboters, aufweisend folgende Verfahrensschritte:

- Eingeben von die Verformung eines Industrieroboters aufgrund der Stellung seiner Achsen und der Schwerkraft beschreibenden Roboterparametern in eine Robotersteuerungsvorrichtung,

- Eingeben von wenigstens einem die Verformung einer mit dem Industrieroboter verbundenen Befestigungsvorrichtung aufgrund der Stellung der Achsen des Industrieroboters und der Schwerkraft beschreibenden Komponentenparameter der Befestigungsvorrichtung und

- aufgrund der Roboter- und Komponentenparameter, Erstellen eines absolutgenauen Modells, das die Verformung des Industrieroboters und der Befestigungsvorrichtung aufgrund der Stellungen der Achsen des Industrieroboters und der Schwerkraft modelliert.

Weist die Roboterteuerungsvorrichtung bereits ein lediglich die Verformung des Industrieroboters modellierendes absolutgenaues Robotermodell auf, dann braucht lediglich der wenigstens eine Komponentenparameter in die Robotersteuerungsvorrichtung eingegeben zu werden, um das absolutgenaue Modell zu erstellen.

Alternativ kann auch das absolutgenaue Modell erstellt werden, indem Parameter eingegeben werden, die die aufgrund der Achsenstellungen des Industrieroboters und der Schwerkraft hervorrufende Verformung des Industrieroboters und der Befestigungsvorrichtung zusammen beschreiben.

Das Eingeben der Parameter kann z.B. mittels einer mit der Robotersteuerungsvorrichtung verbundenen Eingabevorrichtung erfolgen. Ein Eingeben von Parametern ist aber auch durch ein Einlesen von entsprechenden Dateien in die Robotersteuerungsvorrichtung durchführbar.

Dadurch, dass das absolutgenaue Modell der erfindungsgemäßen Robotersteuerungsvorrichtung nicht nur die Verformung des Industrieroboters aufgrund seiner Achsenstellung und der Schwerkraft, sondern auch die Verformung der mit dem Industrieroboter verbundenen Befestigungsvorrichtung berücksichtigt, ergeben sich Vorraussetzungen, dass der Industrieroboter genauer seine Soll-Position erreicht bzw. dass die Abweichung zwischen der Ist-Position des Industrieroboters und seiner Soll-Position geringer ist. Die Position des Industrieroboters ist z.B. die Position seines Flansches oder seines Tool Center Points (TCP).

Absolutgenaue Modelle von gewöhnlichen Robotersteuerungsvorrichtungen modellieren lediglich den Industrieroboter als solchen. Die Befestigungsvorrichtung wird nicht weiter berücksichtigt, da diese bei einer gewöhnlichen Vorgehensweise als steif und als steif mit dem Industrieroboter verbunden angenommen wird. Aufgrund der Berücksichtigung der Verformung der Befestigungsvorrichtung für das absolutgenaue Modell der erfindungsgemäßen Robotersteuerungsvorrichtung ergeben sich Vorraussetzungen für eine verbesserte Performance der Steuerung oder Regelung eines mit der erfindungsgemäßen Robotersteuerungsvorrichtung versehenen Industrieroboters.

Eine Befestigungsvorrichtung ist insbesondere eine Lineareinheit, mit der der Industrieroboter beispielsweise mittels eines Verfahrwagens der Lineareinheit horizontal verfahren wird. Insbesondere wenn die Lineareinheit an einer Decke befestigt ist, dann kann diese sich aufgrund der Achsstellungen des Industrieroboters aber auch aufgrund einer Position des den Industrieroboter bewegenden Verfahrwagens der Lineareinheit aufgrund der Schwerkraft insbesondere um die horizontale Achse verformen. Dann wird bevorzugt die Verformung der Lineareinheit auch in Abhängigkeit der Position des Verfahrwagens modelliert.

Eine andere typische Befestigungsvorrichtung stellen sogenannte Raiser dar, d.h. in der Regel zylinderförmige oder quaderförmige Podeste aus Stahl, auf denen der Roboter aufgestellt wird. Im Gegensatz zu dem Verfahrwagen sind diese Raiser passive Elemente ohne Aktoren.

Das absolutgenaue Modell kann ein absolutgenaues Robotermodell und ein absolutgenaues Komponentenmodell aufweisen, wobei das absolutgenaue Robotermodell lediglich eine Verformung des Industrieroboters aufgrund der Stellung der wenigstens einen Achse und der Schwerkraft und das Komponentenmodell eine Verformung der Befestigungsvorrichtung aufgrund der Stellung der wenigstens einen Achse und der Schwerkraft modelliert. Diese Variante bietet sich insbesondere dann an, wenn die erfindungsgemäße Robotersteuerungsvorrichtung Grundmodule zum Erstellen des absolutgenauen Modells umfasst und das absolutgenaue Modell aus einer variablen Anzahl dieser Grundmodule zusammengesetzt werden kann. Dies ist z.B. dann möglich, wenn der Industrieroboter eine serielle Kinematik in offener Kette aufweist.

Beispielsweise kann das absolutgenaue Modell der erfindungsgemäßen Robotersteuerungsvorrichtung ein Federmodell, insbesondere ein Torsionsfedermodell aus einer Mehrzahl von modellierten Federn sein und die durch die Stellung der wenigstens einen Achse und der Schwerkraft bedingte Verformung des Industrieroboters und der Befestigungsvorrichtung durch Verformungen der Federn modelliert werden.

Das absolutgenaue Modell kann dann aus den absolutgenauen Roboter- und Komponentenmodellen zusammengesetzt werden, die jeweils durch Torsionsfedern (für Drehachsen) oder Linearfedern (für lineare Achsen), die sich aufgrund der Achsenstellung des Industrieroboters und der Schwerkraft verformen, modelliert werden. Da Industrieroboter überwiegend als 6-Arm-Knickroboter ausgebildet sind, wird im Folgenden nur der Fall von Torsionsfedern beschrieben; analoge Überlegungen gelten aber auch für Linearachsen.

Ein Torsionsfedermodell kann beispielsweise unter der Annahme, dass die Elastizitäten in den Getrieben und/ oder Gelenken des Industrieroboters konzentriert angeordnet und die Glieder des Industrieroboters zwischen den Gelenken starr sind, erstellt werden. Die einzelnen Getriebe/ Gelenke werden beispielsweise als einzelne Torsionsfedern um die jeweilige Drehachse und als Torsionsfedern orthogonal zu den jeweiligen Drehachsen modelliert. Somit entsteht für das absolutgenaue Robotermodell eine Folge von Torsionsfedern mit Steifigkeiten $c_i$, deren Verformungen aufgrund der Achsenstellungen und der auf die konzentrierten Massen wirkenden Schwerkraft die Verformung des Industrieroboters beschreiben. Die Steifigkeiten $c_i$ der Torsionsfedern sind dann z.B. die die Verformung des Industrieroboters beschreibenden Roboterparameter. Die Verbindungen zwischen den Gelenken können dann kinematisch durch deren geometrische Ausdehnung modelliert werden, d.h. durch die Massen $m_i$, deren Massenschwerpunkte und Trägheitstensoren, und der Verbindungen ohne dynamische/ elastische Eigenschaften. Aufwändigere Modelle können Strukturbauteile z.B. als Balkenmodelle abbilden.

Die Verformung der Befestigungsvorrichtung ergibt für diese Variante das absolutgenaue Komponentenmodell. Die Befestigungsvorrichtung kann ebenfalls als wenigstens eine Feder, insbesondere als eine Torsionsfeder modelliert werden. Handelt es sich beispielsweise bei der Befestigungsvorrichtung um die an der Decke hängende Lineareinheit, dann kann diese als eine Torsionsfeder in Verfahrrichtung des Verfahrwagens der Lineareinheit und als eine weitere Torsionsfeder in vertikaler Richtung, d.h. in Richtung der Schwerkraft modelliert werden. Die Torsionsfeder in Verfahrrichtung kann vereinfacht eine lineare Steifigkeit aufweisen. Die Torsionsfeder in Richtung der Schwerkraft kann ein konstante Steifigkeit oder bevorzugt eine Steifigkeit aufweisen, die von der Position des Verfahrwagens abhängt.

Das absolutgenaue Modell kann auch aufgrund des Roboterparameter aufweisenden absolutgenauen Robotermodells erstellt werden, indem für das absolutgenaue Modell wenigstens einer der Roboterparameter des absolutgenauen Robotermodells aufgrund der Komponentenparameter modifiziert werden.

Manche Industrieroboter, z.B. manche SCARA (Selective Compliance Assembly Robot Arm) oder 6-Arm Knickroboter umfassen Algorithmen für nur einen beschränkten Umfang, sodass ein eventuell bereits vorhandenes und lediglich den Industrieroboter beschreibendes absolutgenaues Robotermodell nicht um weitere Komponenten erweiterbar ist. Insbesondere für diese Fälle ist diese Variante der erfindungsgemäßen Robotersteuerungsvorrichtung gedacht.

Ist das absolutgenaue Robotermodell ein Federmodell, dann kann auch ein modifiziertes Federmodell als das absolutgenaue Modell erstellt werden, indem wenigstens einer der Roboterparameter, d.h. wenigstens eine Steifigkeit der modellierten Federn des Federmodells des Industrieroboters aufgrund der Komponentenparameter modifiziert wird. Diese Variante ist prinzipiell für Industrieroboter mit einer beliebigen Anzahl von rotatorischen und translatorischen Achsen anwendbar. Das Federmodell kann insbesondere ein Torsionsfedermodell, das modifizierte Federmodell kann insbesondere ein modifiziertes Torsionsfedermodell und die Federn können insbesondere Torsionsfedern sein.

Diese Variante kann auch für reine Achse 1-Bewegung eines 6-Achs-Knickroboters verwendet werden, bei dem sämtliche elastische Roboterkomponenten für eine Bewegung um die Achse 1 des Industrieroboters durch genau eine Torsionsfeder modelliert werden. Dann umfasst das absolutgenaue Robotermodell den Roboterparameter Steifigkeit $c_R$. Dieser Spezialfall dient auch als Erläuterung des Verfahrens.

Aufgrund der Komponentenparameter, die für diese Variante die Steifigkeit $c_K$ der Befestigungsvorrichtung ist, wird die resultierende Steifigkeit $c_g$ des absolutgenauen Modells ermittelt. Dabei berechnet sich die resultierende Steifigkeit $c_g$ unter der Annahme, dass der mittels der Torsionsfeder modellierte Industrieroboter und die als weitere Torsionsfeder modellierte Befestigungsvorrichtung hintereinander geschaltet sind als:

$$c_g \;=\; \frac{c_R \cdot c_K}{c_R + c_K}$$

Die Roboterparameter können aber auch Schwingungsfrequenzen und Trägheiten von Gelenken und/oder Getrieben des Roboters und die Komponentenparameter die Schwingungsfrequenz und Trägheit der Befestigungsvorrichtung sein. Ein Vorteil dieser Parameter ist deren relativ einfache messtechnische Ermittlung. Aus den Schwingungsfrequenzen und den Massen $m$ (bei linearen Bewegungen) bzw. Massenträgheiten $J$ (bei rotatorischen Bewegungen) kann die Schwingungsfrequenz $\omega$ über die Annahme, dass der Industrieroboter bzw. der Industrieroboter mit der Befestigungsvorrichtung ein harmonischer Oszillator ist, ermittelt werden. Die Massen bzw. Massenträgheiten sind in der Regel bekannt und es ergibt sich folgende Gleichung

$$m\ddot{q} + cq = 0 \quad \text{bzw.} \quad J\ddot{q} + cq = 0,$$

wobei $q$ der Achswinkel ist.

Die Steifigkeit $c$ ergibt sich dann gemäß wobei hier $\omega$ als Kreisfrequenz interpretiert wird, die mittels f = $\omega/(2\pi)$ in die Frequenz $f$ in der Einheit Hertz umgerechnet werden kann.

Die Roboterparameter und die Komponentenparameter können auch mittels Berechnung über Finite-Elemente-Methoden ermittelt werden.

Alternativ können die Eigenfrequenzen auch aus Finite-Elemente Modelle berechnet werden.

Ausführungsbeispiele der Erfindung sind exemplarisch in den beigefügten schematischen Zeichnungen dargestellt. Es zeigen:

Fig. 1          eine Achse eines Industrieroboters,

Fig. 2          einen Industrieroboter,

Fig. 3          ein absolutgenaues Modell des Industrieroboters,

Fig. 4, 5       den mit einer Lineareinheit verbundenen Industrieroboter,

Fig. 6          ein absolutgenaues Modell des Industrieroboters mit Lineareinheit,

Fig. 7          einen 1-Achs Roboter mit einer Lineareinheit

Fig. 8          ein absolutgenaues Modell des 1-Achs Roboters mit der Lineareinheit und

Fig. 9          ein Flussdiagramm zur Veranschaulichung eines Verfahrens zum Erhalten eines absolut genauen Modells.

Die Fig. 1 wurde bereits in der Einleitung beschrieben.

Die Fig. 2 zeigt einen allgemein bekannten 6-Achs-Knickarm-Industrieroboter R mit mehreren Achsen 11-16, die durch Hebel 17-20 miteinander verbunden sind. Die Achsen 11-16 werden von nicht dargestellten, jedoch allgemein bekannten Antrieben z.B. über Getriebe und Wellen bewegt. Im Falle des vorliegenden Ausführungsbeispiels sind die Antriebe elektrische Antriebe, die mit in den Figuren nicht dargestellten elektrischen Leitungen mit einer Steuerungsvorrichtungen 21 des Industrieroboters R verbunden sind. Auf der Steuerungsvorrichtung 21, die z.B. ein Rechner ist, läuft ein Rechnerprogramm, das die elektrischen Antriebe in allgemein bekannte Weise derart ansteuert, sodass ein Flansch 22 des Industrieroboters R ein nicht näher dargestelltes am Flansch 22 befestigtes Objekt, beispielsweise ein Werkzeug, bzw. sodass der Tool Center Point (TCP) des Objekts vorgegebene Positionen im Raum anfahren kann.

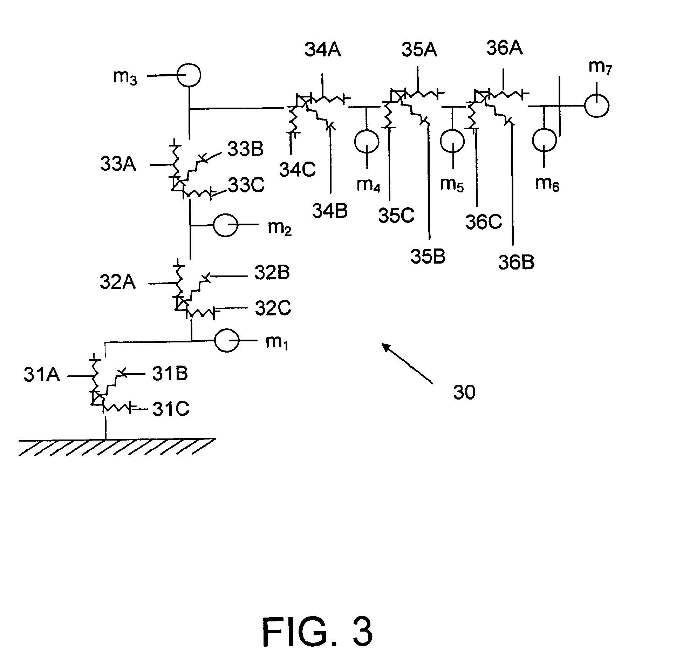

Damit die Steuerungsvorrichtung 21 bzw. das auf der Steuerungsvorrichtung 21 laufende Rechnerprogramm die Antriebe derart ansteuert, dass der Flansch 22 bzw. der TCP eine Soll-Position im Raum anfahren kann, ist in der Steuerungsvorrichtung 21 neben einem kinematischen Modell auch ein in der Fig. 3 gezeigtes elastisches bzw. absolutgenaues Modell 30 des Industrieroboters R hinterlegt. Das kinematische Modell beschreibt die allgemeinen räumlichen Bewegungen des Industrieroboters R durch im Wesentlichen eine Beschreibung der Geometrie des Industrieroboters R ohne auf ihn wirkende Kräfte oder Momente zu berücksichtigen.

Durch die eventuell auch lastabhängigen Kräfte oder Momente hervorgerufenen Verformungen des Industrieroboters R können jedoch dazu führen, dass sich eine Ist-Position des Industrieroboters R bzw. seines Flansches 22 von seiner Soll-Position unterscheidet. Das absolutgenaue Modell und darauf aufbauende Algorithmen 30 berücksichtigen diese eventuell auftretenden Unterschiede zwischen der Ist-Position des Flansches 22 bzw. des TCP und dessen Soll-Position, wodurch die Absolutgenauigkeit des Industrieroboters R verbessert wird.

Im Falle des vorliegenden Ausführungsbeispiels wird für das absolutgenaue Modell 30 angenommen, dass die Elastizitäten in den Gelenken, Getrieben oder Wellen des Industrieroboters R konzentriert sind und somit als Torsionsfedern 31A-36A um die jeweilige Achsen 11-16, sowie weiterer Torsionsfedern 31B-31B, 31C-36C in den zwei orthogonalen Koordinatenachsen eines im jeweiligen Getriebe der relevanten Achse 11-16 gedachten Koordinatensystems modelliert werden. Die Glieder (Hebel 17-20) zwischen den Gelenken werden als starr angenommen, sodass die Verbindungen zwischen den Gelenken der Achsen 11-16 kinematisch durch ihre geometrischen Ausdehnung modelliert werden, und mit Masseeigenschaften $m_1$-$m_6$ (Masse, Massenschwerpunkt, Trägheitstensor) versehen werden. Für die Masseeigenschaften $m_1$-$m_6$ werden die Massen der Glieder zwischen den Getrieben als in ihren Masseschwerpunkten konzentriert angenommen. Zusätzlich können der Übersicht halber in nicht dargestellter Weise Strukturbauteile des Industrieroboters R z.B. durch eine Approximation durch Balkenelemente beschrieben werden, was ebenfalls auf eine Folge von Federn führt (Bernoulli-Balken).

Folglich modelliert das absolutgenaue Modell 30 den Industrieroboter R im Falle des vorliegenden Ausführungsbeispiels als eine Folge von Federn 31A-36A, 31B-36B, 31C-36C mit den Steifigkeiten $c_{1,A}$-$c_{6,A}$, $c_{1,B}$-$c_{6,B}$, $c_{1,C}$-$c_{6,C}$ und zugeordneten Dämpfungen.

Das am Flansch 22 befestigte Objekt wird ebenfalls durch seine Masseeigenschaft $m_7$ beschrieben.

Aufgrund der Massen $m_1$-$m_7$ und der Federsteifigkeiten $c_{1,A}$-$c_{6,A}$, $c_{1,B}$-$c_{6,B}$, $c_{1,C}$-$c_{6,C}$ der modellierten Federn 31A-36A, 31B-36B, 31C-36C sind diese je nach Stellung der Achsen 11-16 verschieden stark gedehnt. Diese von den Stellungen der Achsen 11-16 und der Schwerkraft abhängige Verformung der Federn 31A-36A, 31B-36B, 31C-36C ist in dem absolutgenauen Modell 30 hinterlegt, wobei die Verformung z.B. aufgrund der Massen $m_1$-$m_6$ berechnet werden können oder experimentell ermittelt wurden.

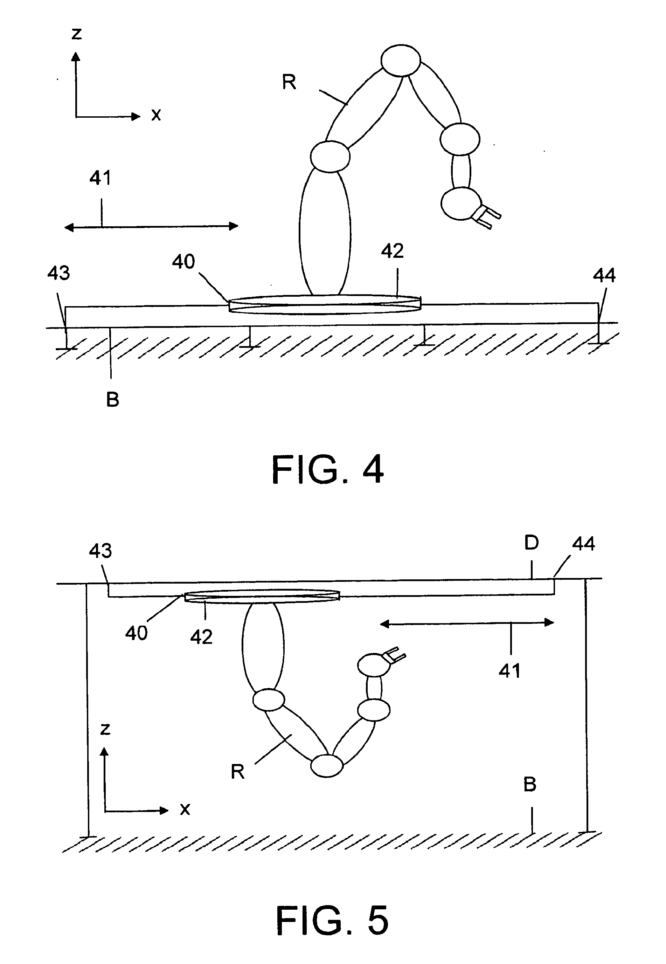

Der Industrieroboter R ist auf einer Befestigungsvorrichtung montiert. Die Befestigungsvorrichtung ist im Falle des vorliegenden Ausführungsbeispiels eine in den Figuren 4 und 5 dargestellte Lineareinheit 40 mit einem Verfahrwagen 42, auf dem der Industrieroboter R befestigt ist. Der Verfahrwagen 42 der Lineareinheit 40 kann mit dem Industrieroboter R linear in horizontaler Richtung (x-Richtung) entlang eines Doppelpfeils 41 bewegt werden, wobei in der Fig. 4 die Lineareinheit 40 als am Boden B mittels mehrerer (gezeichnet: zweier) Befestigungen 43, 44 und in der Fig. 5 als an der Decke D mittels der Befestigungen 43, 44 befestigt dargestellt ist. Im Falle des vorliegenden Ausführungsbeispiels wird die Lineareinheit 40 und der Industrieroboter R von derselben Steuerungsvorrichtung 21 angesteuert.

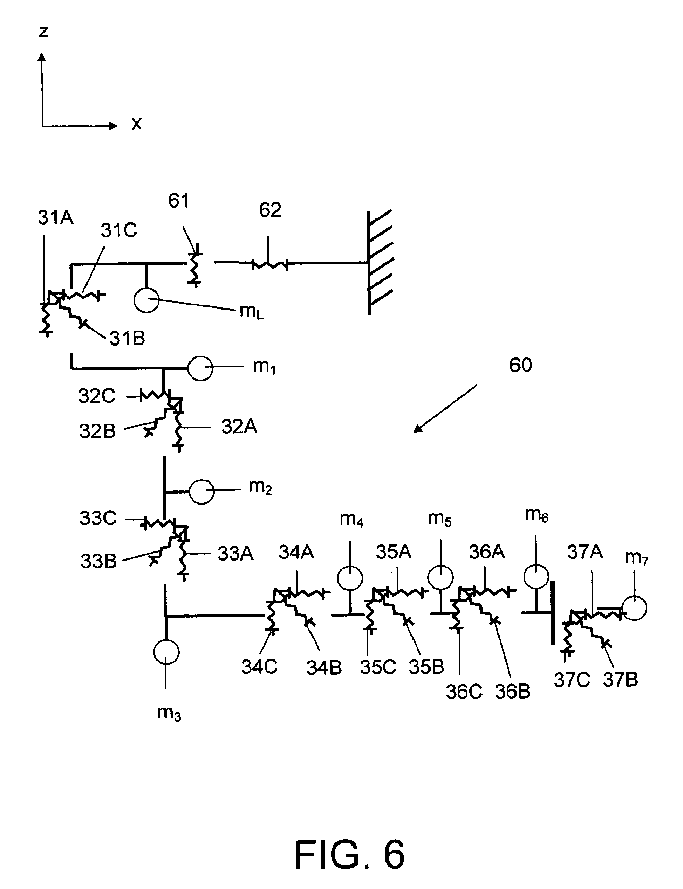

Die Lineareinheit 40 kann ebenfalls durch Federn mit Federsteifigkeiten modelliert werden. Im Falle des vorliegenden Ausführungsbeispiels wird die Lineareinheit 40, wie in der Fig. 6 gezeigt, durch zwei Linearfedern 61, 62 modelliert, wobei die Feder 61 eine Steifigkeit $c_{L,z}$ in Richtung der z-Achse und die Feder 62 eine Steifigkeit $c_{L,x}$ in Richtung der x-Achse aufweist. Des Weiteren wird die Masse der Lineareinheit 40 und insbesondere deren Verfahrwagen 42 als konzentrierte Masse $m_L$ modelliert.

Im Falle des vorliegenden Ausführungsbeispiels wird die Steifigkeit $c_{L,x}$ in Richtung der x-Achse als linear vereinfacht modelliert und die Steifigkeit $c_{L,z}$ in Richtung der z-Achse als abhängig von der Auslenkung x des Verfahrwagens 43 der Lineareinheit 40 angenommen.

Ist die Lineareinheit 40 am Boden B angeordnet, dann ist diese üblicherweise mit mehreren Dübeln befestigt, sodass deren Torsion um die Verfahrrichtung vernachlässigt werden kann.

Ist die Lineareinheit 40 dagegen wie in der Fig. 5 gezeigt an der Decke D befestigt (hängende Konstruktion), dann sollte die Torsion um die Verfahrrichtung entlang des Doppelpfeils 41 mit modelliert werden, wie dies in der Fig. 6 gezeigt ist. Befindet sich der Verfahrwagen 42 nahe an einer der beiden Befestigungen 43, 44, dann ist die Steifigkeit $c_{L,z}$ größer als wenn sich der Verfahrwagen 42 z.B. mittig zwischen den beiden Befestigungen 43, 44 befindet.

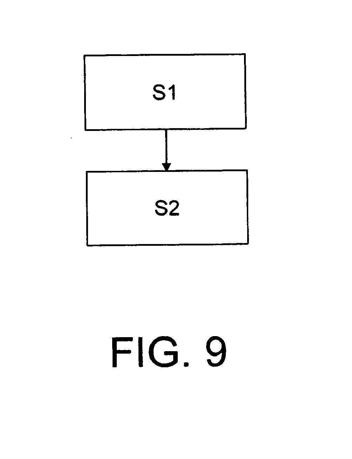

Im Falle des vorliegenden Ausführungsbeispiels können die Steifigkeiten $c_{L,z}$, $c_{L,x}$ der Federn 61, 62 der Lineareinheit 40 sowie deren funktionale Abhängigkeit von der Position des Verfahrwagens 42 mit einer Tastatur 23 der Steuervorrichtung 21 eingegeben werden, Schritt S1 eines in den Fig. 9 dargestellten Flussdiagramms, woraufhin das auf der Steuervorrichtung 21 laufende Rechnerprogramm das in der Fig. 3 gezeigte absolutgenaue Modell 30 um die die Lineareinheit 40 modellierenden Linearfedern 61, 62 mit der positionsabhängigen Steifigkeit $c_{L,z}$ und der linearen Steifigkeit $c_{L,x}$ erweitert, woraus sich für die an der Decke D befestigte Lineareinheit 40 mit daran befestigten Industrieroboter R ein in der Fig. 6 gezeigtes erweitertes absolutgenaues Modell 60 ergibt, das sowohl den Industrieroboter R als auch die Lineareinheit 40 modelliert, Schritt S2 des Flussdiagramms der Fig. 9. Fig. 6 zeigt zusätzlich ein elastisches Werkzeug am Flansch 22 bzw. ein elastisch am Flansch 22 angebrachtes Werkzeug.

Die Steuerungsvorrichtung 21 bzw. das auf der Steuerungsvorrichtung 21 laufende und für die Steuerung oder Regelung der Position oder Bewegung des Flansches 22 bzw. des TCP vorgesehene Rechnerprogramm verwendet dann das erweiterte absolutgenaue Modell 60 für die Ansteuerung der elektrischen Antriebe des Industrieroboters R sowie der Lineareinheit 40. Aufgrund eines in den Figuren nicht näher dargestellten Antriebs zum Verfahren des Verfahrwagens 42 der Lineareinheit 40 kann ferner die Position des Verfahrwagens 42 relativ zu den Befestigungen 42, 43 ermittelt werden, wodurch die Steifigkeit $c_{L,z}$ der Torsionsfeder 61 als Funktion der Position des Verfahrwagens 42 beschrieben werden kann.

Die Verformung der Lineareinheit 40 bzw. der die Lineareinheit 40 modellierenden Torsionsfedern 61, 62 wird durch die Schwerkraft bedingt. Die Verformung der Lineareinheit 40 in z-Richtung, also die Verformung der die Lineareinheit 40 modellierenden Torsionsfeder 61 mit der Steifigkeit $c_{L,z}$, ergibt sich zu $c_{L,z} \cdot m$, wobei $m$ die Masse des Industrieroboters R inklusive der Masse $m_7$ des am Flansch 22 befestigten Objekts ist. Die Verformungen der Torsionsfedern 61, 62 wird durch ein Moment um die x-Richtung, die wiederum abhängig von der Auslenkung des Industrieroboters R ist, bewirkt.

Im Falle des vorliegenden Ausführungsbeispiels ist das absolutgenaue Modell 60 auch derart ausgeführt, dass das am Flansch 22 angeordnete Objekt nicht als starr am Flansch 22 befestigt modelliert ist, sondern ebenfalls als drei Torsionsfedern 37A-37C mit entsprechenden Steifigkeiten modelliert ist, sodass deren positionsabhängige Verformungen für die Modellierung des mit der Lineareinheit 40 verbundenen Industrieroboters R berücksichtigt wird.

Für ein alternatives Ausführungsbeispiel ist die Steuerungsvorrichtung 21 derart programmiert, dass sie aufgrund der eingegebenen Steifigkeit $c_{L,x}$, $c_{L,z}$ des Linearantriebs 40 das in der Fig. 3 gezeigte absolutgenaue Modell 30 des Industrieroboters R folgendermaßen modifiziert:

Die den Linearantrieb 40 in x-Richtung modellierende Torsionsfeder 62 ist in Serie mit der der Achse 1 zugeordneten Torsionsfeder 31C und die den Linearantrieb 40 in z-Richtung modellierende Torsionsfeder 61 ist in Serie mit der der Achse 11 zugeordneten Torsionsfeder 31C geschaltet.

Die Torsionsfeder 61 und die Torsionsfeder 31C kann demnach als eine einzige Torsionsfeder modelliert werden, deren Steifigkeit $c_{res,z}$ die Steuervorrichtung 21 folgendermaßen errechnet:

$$c_{res,z} = \frac{c_{L,z} \cdot c_{1,c}}{c_{L,z} + c_{1,,c}}$$

Die Torsionsfeder 62 und die Torsionsfeder 31C kann demnach als eine einzige Torsionsfeder modelliert werden, deren Steifigkeit $c_{res,x}$ die Steuervorrichtung 21 folgendermaßen errechnet:

$$c_{res,x} = \frac{c_{L,x} \cdot c_{1,C}}{c_{L,x} + c_{1,C}}$$

Im Falle des vorliegenden Ausführungsbeispiels ist die Steuerungsvorrichtung 21 ferner derart programmiert, dass sie den Parameter Steifigkeit $c_{1,c}$ der Torsionsfeder 31C des absolutgenauen Modells 30 durch die resultierende Steifigkeit $c_{res,z}$ und den Parameter Steifigkeit $c_{1,c}$ der Torsionsfeder 31C des absolutgenauen Modells 30 durch die resultierende Steifigkeit $C_{res,x}$ ersetzt, woraus ein modifiziertes absolutgenaues Modell entsteht, das das Verhalten des Industrieroboters R inklusive Linearantrieb 40 beschreibt. Das modifizierte absolutgenaue Modell ist Grundlage für die Soll-Position des Flansches 22 bzw. des TCP.

Entsprechend kann auch die absolutgenaue Modellierung des am Flansch 22 befestigten Objekts in eine Modifikation des absolutgenauen Modells 30 einfließen, indem z.B. die Steifigkeiten $c_{6,A}$ - $c_{6,C}$ der der Achse 16 zugeordneten Torsionsfedern 36A - 36C aufgrund der die Steifigkeiten $c_{7,A}$ - $c_{7,C}$ der dem am Flansch 22 befestigten Objekts zugeordneten Torsionsfedern 37A - 37C modifiziert werden.

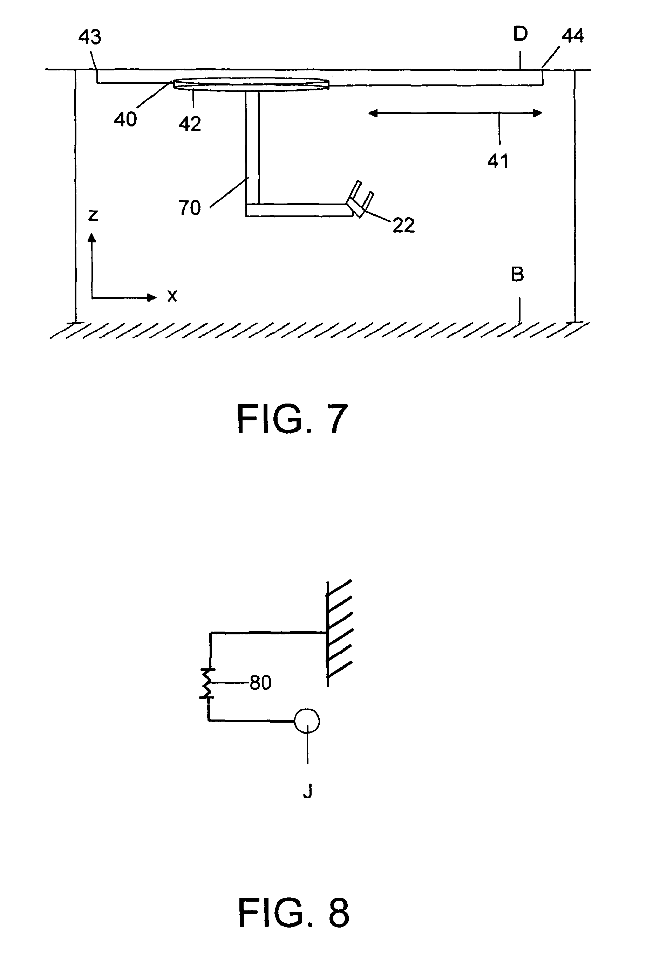

Die Fig. 7 zeigt ein weiteres Ausführungsbeispiel in Form eines 1-Achs Roboters 70, der mit der Lineareinheit 40 verbunden ist, und dessen Drehachse parallel zur Verfahrachse der Lineareinheit verläuft. Für ein absolutgenaues Modell kann der Industrieroboter 70 mit Lineareinheit 40 als eine Torsionsfeder 80 mit einer Steifigkeit $c_{ges}$ modelliert werden, wie es in der Fig. 8 gezeigt ist. Die positionsabhängige Verformung der Torsionsfeder 80 ergibt somit das absolutgenaue Modell des Industrieroboters 70 mit Lineareinheit 40.

Die Steifigkeit $c_{ges}$ kann dann auch folgendermaßen experimentell ermittelt werden:

Der Industrieroboter 70 mit der Lineareinheit 40 wird als harmonischer Oszillator mit der Masse m (bei linearen Bewegungen) bzw. mit dem Trägheitsmoment J (bei rotatorischen Bewegungen) modelliert:

$$m\ddot{q} + c_{ges}q = 0 \quad \text{bzw.}$$

$$J\ddot{q} + c_{ges}q = 0 \quad \text{bzw.}$$

wobei m die Gesamtmasse bzw. J das Gesamtträgheitsmoment des Industrieroboters 70 mit Lineareinheit 40 und $C_{ges}$ die resultierende Steifigkeit des Roboters 70 mit Lineareinheit 40 ist.

Der Industrieroboter 70 mit der Lineareinheit 40 wird durch einen Stoß (Impuls) zu Schwingungen angeregt. Es ergibt sich ein Ausschwingvorgang in Form einer gedämpften harmonischen Schwingung, die im Falle des vorliegenden Ausführungsbeispiels über geeignete Messvorrichtungen beobachtet wird. Als Messvorrichtungen sind beispielsweise Beschleunigungssensoren am Flansch 22 des Roboters 70 oder ein nicht dargestelltes Kamerasystem, das den sogenannten TCP des Industrieroboters 70 beobachtet, geeignet.

Alternativ kann der Ausschwingvorgang auch mit am nicht näher dargestellten elektrischen Antrieb angeordneten Positionssensoren oder durch eine Analyse des elektrischen Stroms des Antriebs beobachtet werden.

Der Ausschwingvorgang ergibt ein Signal u(t) als Funktion der Zeit t = O...T zu diskreten Zeitpunkten. Die physikalische Größe ist entweder die Position, die Beschleunigung oder der elektrische Strom.

Der Ausschwingvorgang eines gedämpften harmonischen Oszillators ergibt für den Achsenwinkel q(t) allgemein den folgenden Verlauf:

$$q(t) = A \cdot e^{-d \cdot t} \cdot \sin(\omega \cdot t + \varphi)$$

wobei $\omega$ die Schwingungsfrequenz, $d$ der Abklingkoeffizient (Dämpfungswert) und $\varphi$ ein Phasenwinkel ist.

Durch Minimierung des Fehlers (im Fall der Messung von Positionen)

$$\min_{A, \ d, \ \omega+\varphi} \sum_{t=0}^{T} (u(t) - q(t))^2$$

kann daraus die Kreisfrequenz $\omega$ der Schwingung bzw. über den Zusammenhang

$$\omega^2 = \frac{c_{ges}}{m}$$

oder

$$\omega^2 = \frac{c_{ges}}{J}$$

die resultierende Steifigkeit $c_{ges}$ des Roboters 70 mit Lineareinheit 40 ermittelt werden.

Bei gemessener Beschleunigung kann $\omega$ über die Optimierung der Abweichung zwischen u(t) und der nach Modell vorliegenden Beschleunigung

$$q''(t) = -A \cdot d^2 \cdot \omega^2 \cdot e^{-d \cdot t} \cdot \sin(\omega \cdot t + \varphi)$$

ermittelt werden.

Bei gemessenem Motorstrom $I(t)$ kann über den kT-Faktor $kT$ in Motormomente $\tau(t)$ und dann über die Massenträgheit $J$ in die Beschleunigung $q''(t)$ umgerechnet werden:

$$q''(t) = \frac{\tau(t)}{J} = \frac{kT * I(t)}{J}$$

Alternativ kann nur die Steifigkeit der Lineareinheit 40 nach dem eben beschriebenen Verfahren ermittelt werden, um entweder das in de Fig. 6 dargestellte absolutgenaue Modell 60 zu erhalten oder das in der Fig. 3 gezeigte absolutgenaue Modell 30 geeignet zu modifizieren.

**Patentansprüche**

1. Robotersteuerungsvorrichtung, aufweisend ein absolutgenaues Modell (60, 80) für einen mit der Robotersteuerungsvorrichtung (21) zu steuernden Industrieroboter (R, 70), der mit wenigstens einer Komponente, die eine Befestigungsvorrichtung ist, (40) verbunden ist, wobei der Industrieroboter (R, 70) wenigstens eine Achse (11-16) aufweist und das absolutgenaue Modell (60, 80) eine Verformung des Industrieroboters (R, 70) aufgrund der Stellung der wenigstens einen Achse (11-16) und der Schwerkraft modelliert, **dadurch gekennzeichnet, dass** das absolutgenaue Modell (60, 80) auch eine Verformung der Befestigungsvorrichtung (40) aufgrund der Stellung der wenigstens einen Achse (11-16) modelliert.

2. Robotersteuerungsvorrichtung nach Anspruch 1, derer Befestigungsvorrichtung eine Lineareinheit (40) ist, die insbesondere an einer Decke (D) befestigt ist.

3. Robotersteuerungsvorrichtung nach Anspruch 2, bei der die Verformung der Lineareinheit (40) von einer Position eines Verfahrwagens (42) der Lineareinheit (40), mittels der der Industrieroboter (R, 70) verfahrbar ist, abhängt und die Abhängigkeit der Verformung der Lineareinheit (40) von der Position des Verfahrwagens (42) für das absolute Modell (60) mitberücksichtigt ist.

4. Robotersteuerungsvorrichtung nach einem der Ansprüche 1 bis 3, deren absolutgenaues Modell (60) ein absolutgenaues Robotermodell (30) und ein absolutgenaues Komponentenmodell (61, 62, $m_L$) aufweist, wobei das absolutgenaue Robotermodell (30) lediglich eine Verformung des Industrieroboters (R) aufgrund der Stellung der wenigstens einen Achse (11-16) und der Schwerkraft und das Komponentenmodell (61, 62, $m_L$) eine Verformung der Befestigungsvorrichtung (40) aufgrund der Stellung der wenigstens einen Achse (11-16) und der Schwerkraft modelliert.

5. Robotersteuerungsvorrichtung nach einem der Ansprüche 1 bis 3, deren absolutgenaues Modell Parameter aufweist und aus einem lediglich die Verformung des Industrieroboters (R) beschreibenden und Roboterparameter aufweisenden absolutgenauen Robotermodell (30) hervorgeht, wobei wenigstens einer der Parameter des absolutgenauen Modells ein modifizierter Roboterparameter ist, der aufgrund wenigstens eines Komponentenparameters der Befestigungsvorrichtung (40) modifiziert ist.

6. Robotersteuerungsvorrichtung nach einem der Ansprüche 1 bis 5, deren absolutgenaues Modell ein Federmodell (60) aus einer Mehrzahl von modellierten Federn (31A-36A, 31B-31B, 31C-31D, 61, 62) ist und die durch die Stellung der wenigstens einen Achse (11-16) und der Schwerkraft bedingte Verformung des Industrieroboters (R) und der Befestigungsvorrichtung (40) durch Verformungen der Federn (31A-36A, 31B-31B, 31C-31D, 61, 62) modelliert wird.

7. Industrieroboter mit einer Robotersteuerung (21) nach einem der Ansprüche 1 bis 6.

8. Verfahren zum Erhalten eines absolutgenauen Modells für die Steuerung eines Industrieroboters (R), aufweisend folgende Verfahrensschritte:

   - Eingeben von die Verformung eines Industrieroboters (R) aufgrund der Stellung seiner Achsen (11-16) und der Schwerkraft beschreibenden Roboterparametern in eine Robotersteuerungsvorrichtung (21),
   - Eingeben von wenigstens einem die Verformung einer mit dem Industrieroboter (R) verbundenen Komponente, die eine Befestigungsvorrichtung ist, (40) aufgrund der Stellung der Achsen (11-16) des Industrieroboters (R) und der Schwerkraft beschreibenden Komponentenparameter der Befestigungsvorrichtung (40) und
   - Aufgrund der Roboter- und Komponentenparameter, Erstellen und algorithmische Verwendung eines absolutgenauen Modells (60, 80), das die Verformung des Industrieroboters (R) und der Befestigungsvorrichtung (40) aufgrund der Stellungen der Achsen (11-16) des Industrieroboters (R) und der Schwerkraft modelliert.

9. Verfahren nach Anspruch 8, zusätzlich aufweisend folgende Verfahrensschritte:

   - Erstellen eines lediglich die Verformung des Industrieroboters (R) beschreibenden absoluten Robotermodells (30) aufgrund der eingegebenen Roboterparameter,
   - Erstellen eines die Verformung der Befestigungsvorrichtung (40) beschreibenden absoluten Komponentenmodells (61, 62, $m_L$) aufgrund des wenigstens einen eingegebenen Komponentenparameters und
   - Erstellen des absolutgenauen Modells (60) durch Zusammensetzen der absoluten Roboter- und Komponentenmodelle (30, 61, 62, $m_L$, 37).

**10.** Verfahren nach Anspruch 8, zusätzlich aufweisend folgende Verfahrensschritte:

- Erstellen eines lediglich die Verformung des Industrieroboters (R) beschreibenden absolutgenauen Robotermodells (30) aufgrund der Roboterparameter und
- Erstellen des absolutgenauen Modells durch Modifizieren von wenigstens einem der Roboterparameter des absolutgenauen Robotermodells (30) aufgrund des wenigstens einen Komponentenparameters.

**11.** Verfahren zum Erhalten eines absolutgenauen Models für die Steuerung eines Industrieroboters (R), aufweisend folgende Verfahrensschritte:

- Eingeben von wenigstens einen die Verformung einer mit einem Industrieroboter (R) verbundenen Komponente, die eine Befestigungsvorrichtung ist, (40) aufgrund der Stellung von Achsen (11-16) des Industrieroboters (R) und der Schwerkraft beschreibenden Komponentenparameter der Befestigungsvorrichtung (40) und
- Erstellen eines absolutgenauen Modells (60, 80), das die Verformung des Industrieroboters (R) und der Befestigungsvorrichtung (40) aufgrund der Stellungen der Achsen (11-16) des Industrieroboters (R) und der Schwerkraft modelliert auf Grundlage eines in der Robotersteuerungsvorrichtung (21) gespeicherten und die lediglich Verformung des Industrieroboters (R) aufgrund der Stellung seiner Achsen (11-16) und der Schwerkraft beschreibenden absolutgenauen Robotermodells (30).

**12.** Verfahren nach Anspruch 11, bei dem das absolutgenaue Modell aufgrund folgender Verfahrensschritte erstellt wird:

- Erstellen eines die Verformung der Befestigungsvorrichtung (40) beschreibenden absolutgenauen Komponentenmodells (61, 62, $m_L$) aufgrund des wenigstens einen eingegebenen Komponentenparameters und
- Erstellen des absolutgenauen Modells (60) durch Zusammensetzen der absolutgenauen Roboter- und Komponentenmodelle (30, 61, 62, mL).

**13.** Verfahren nach Anspruch 11, bei dem das absolutgenaue Robotermodell (30) die Verformung des Industrieroboters (R) aufweisende Roboterparameter umfasst und das absolutgenaue Modell durch Modifizieren von wenigstens einem der Roboterparameter des absolutgenauen Robotermodells (30) aufgrund der wenigstens einen Komponentenparameter erstellt wird.

**14.** Verfahren nach einem der Ansprüche 8 bis 13, bei dem das absolutgenaue Modell ein Federmodell (60) aus einer Mehrzahl von modellierten Federn (31A-36A, 31B-31B, 31C-31D, 61, 62) ist und die durch die Stellung der Achsen (11-16) und der Schwerkraft bedingte Verformung des Industrieroboters (R) und der Befestigungsvorrichtung (40) durch Verformungen der Federn (31A-36A, 31B-31B, 31C-31D, 61, 62) modelliert wird.

**15.** Verfahren nach einem der Ansprüche 8 bis 14, bei dem die Befestigungsvorrichtung eine Lineareinheit (40) ist, die insbesondere an einer Decke (D) befestigt ist.

**16.** Verfahren nach Anspruch 15, bei dem die Verformung der Lineareinheit (40) von einer Position eines Verfahrwagens (42) der Lineareinheit (40), mittels der der Industrieroboter (R, 70) verfahrbar ist, abhängt und die Abhängigkeit der Verformung der Lineareinheit (40) von der Position des Verfahrwagens (42) für das absolute Modell (60) mitberücksichtigt ist.

**Claims**

**1.** Robot control device, comprising an absolutely precise model (60, 80) for an industrial robot (R, 70) to be controlled by the robot control device (21), which industrial robot is connected to at least one component, which is a securing device (40), wherein the industrial robot (R, 70) comprises at least one axis (11-16) and the absolutely precise model (60, 80) models a deformation of the industrial robot (R, 70) on the basis of the position of the at least one axis (11-16) and gravity, **characterised in that** the absolutely precise model (60, 80) also models a deformation of the securing device (40) on the basis of the position of the at least one axis (11-16).

**2.** Robot control device according to claim 1, the securing device of which is a linear unit (40) which is secured in particular to a ceiling (D).

**3.** Robot control device according to claim 2, in which the deformation of the linear unit (40) is dependent on a position of a transport car (42) of the linear unit (40), by means of which the industrial robot (R, 70) can be moved, and the dependency of the deformation of the linear unit (40) on the position of the transport car (42) is also taken into consideration for the absolute model (60).

4.  Robot control device according to one of claims 1 to 3, the absolutely precise model (60) of which comprises an absolutely precise robot model (30) and an absolutely precise component model (61, 62, $m_L$), wherein the absolutely precise robot model (30) only models a deformation of the industrial robot (R) on the basis of the position of the at least one axis (11-16) and gravity and the component model (61, 62, $m_L$) models a deformation of the securing device (40) on the basis of the position of the at least one axis (11-16) and gravity.

5.  Robot control device according to one of claims 1 to 3, the absolutely precise model of which comprises parameters, and proceeds from an absolutely precise robot model (30) simply describing the deformation of the industrial robot (R) and comprising robot parameters, wherein at least one of the parameters of the absolutely precise model is a modified robot parameter, which is modified on the basis of at least one component parameter of the securing device (40).

6.  Robot control device according to one of claims 1 to 5, the absolutely precise model of which is a spring model (60) comprising of a plurality of modelled springs (31 A-36A, 31 B-31 B, 31 C-31 D, 61, 62) and which is modelled by the position of the at least one axis (11-16) and the gravity determined deformation of the industrial robot (R) and the securing device (40) by deformation of the springs (31A-36A, 31 B-31 B, 31 C-31 D, 61, 62).

7.  Industrial robot with a robot control (21) according to one of claims 1 to 6.

8.  Method for obtaining an absolutely precise model for controlling an industrial robot (R) comprising the following method steps:

    - inputting robot parameters describing the deformation of an industrial robot (R) on the basis of the position of its axes (11-16) and gravity into a robot control device (21),
    - inputting at least one component parameter of the securing device (40) describing the deformation of a component connected to the industrial robot (R), which component is a securing device (40), on the basis of the position of the axes (11-16) of the industrial robot (R) and gravity and
    - on the basis of the robot and component parameters, creating and algorithmic using of an absolutely precise model (60, 80) which models the deformation of the industrial robot (R) and the securing device (40) on the basis of the positions of the axes (11-16) of the industrial robot (R) and gravity.

9.  Method according to claim 8, additionally comprising the following method steps:

    - creating an absolute robot model (30) describing simply the deformation of the industrial robot (R) on the basis of the entered robot parameters,
    - creating an absolute component model (61, 62, $m_L$) describing the deformation of the securing device (40) on the basis of the at least one entered component parameter and
    - creating the absolutely precise model (60) by putting together the absolute robot and component models (30, 61, 62, $m_L$, 37).

10. Method according to claim 8, additionally comprising the following method steps:

    - creating an absolutely precise robot model (30) simply describing the deformation of the industrial robot (R) on the basis of the robot parameters and
    - creating the absolutely precise model by modifying at least one of the robot parameters of the absolutely precise robot model (30) on the basis of the at least one component parameter.

11. Method for obtaining an absolutely precise model for the control of an industrial robot (R) comprising the following method steps:

    - inputting at least one component parameter describing the deformation of a component connected to an industrial robot (R), which component is a securing device (40), on the basis of the position of axes (11-16) of the industrial robot (R) and gravity and
    - creating an absolutely precise model (60, 80) which models the deformation of the industrial robot (R) and the securing device (40) on the basis of the positions of the axes (11-16) of the industrial robot (R) and gravity on the basis of an absolutely precise robot model (30) saved in the robot control device (21) and describing the simple deformation of the industrial robot (R) on the basis of the position of its axes (11-16) and gravity.

**12.** Method according to claim 11, in which the absolutely precise model is created on the basis of the following method steps:

- creating an absolutely precise component model (61, 62, mL) describing the deformation of the securing device (40) on the basis of the at least one entered component parameter and
- creating the absolutely precise model (60) by putting together the absolutely precise robot and component models (30, 61, 62, mL).

**13.** Method according to claim 11, in which the absolutely precise robot model (30) comprises robot parameters comprising the deformation of the industrial robot (R), and the absolutely precise model is created by modifying at least one of the robot parameters of the absolutely precise robot model (30) on the basis of the at least one component parameter.

**14.** Method according to one of claims 8 to 13, in which the absolutely precise model is a spring model (60) comprising of a plurality of modelled springs (31A-36A, 31 B-31 B, 31 C-31 D, 61, 62) and the deformation of the industrial robot (R) and the securing device (40) determined by the position of the axes (11-16) and gravity is modelled by the deformation of the springs (31 A-36A, 31 B-31 B, 31C-31 D, 61, 62).

**15.** Method according to one of claims 8 to 14, in which the securing device is a linear unit (40) which is secured in particular to a ceiling (D).

**16.** Method according to claim 15, in which the deformation of the linear unit (40) is dependent on a position of a transport car (42) of the linear unit (40), by means of which the industrial robot (R, 70) can be moved, and the dependency of the deformation of the linear unit (40) on the position of the transport car (42) is also taken into account for the absolute model (60).

## Revendications

**1.** Dispositif de commande de robot, présentant un modèle (60, 80) absolument exact pour un robot industriel (R, 70) à commander avec le dispositif de commande de robot (21), lequel est relié à au moins un composant qui est un dispositif de fixation (40), le robot industriel (R, 70) présentant au moins un axe (11-16) et le modèle (60, 80) absolument exact modélisant une déformation du robot industriel (R, 70) sur la base de la position d'au moins un axe (11-16) et de la pesanteur, **caractérisé en ce que** le modèle (60, 80) absolument exact modélise aussi une déformation du dispositif de fixation (40) sur la base de la position d'au moins un axe (11-16).

**2.** Dispositif de commande de robot selon la revendication 1, dont le dispositif de fixation est une unité linéaire (40) qui est fixée en particulier sur un plafond (D).

**3.** Dispositif de commande de robot selon la revendication 2, dans lequel la déformation de l'unité linéaire (40) dépend d'une position d'un chariot mobile (42) de l'unité linéaire (40), au moyen de laquelle le robot industriel (R, 70) peut être déplacé, et la dépendance de la déformation de l'unité linéaire (40) de la position du chariot mobile (42) est prise en compte pour le modèle absolu (60).

**4.** Dispositif de commande de robot selon l'une des revendications 1 à 3, dont le modèle (60) absolument exact présente un modèle de robot (30) absolument exact et un modèle de composant (61, 62, $m_L$) absolument exact, le modèle de robot (30) absolument exact modélise uniquement une déformation du robot industriel (R) sur la base de la position dudit au moins axe (11-16) et de la pesanteur, et le modèle de composant (61, 62, $m_L$) modélisant une déformation du dispositif de fixation (40) sur la base de la position dudit au moins axe (11-16) et de la pesanteur.

**5.** Dispositif de commande de robot selon l'une des revendications 1 à 3, dont le modèle absolument exact présente des paramètres et découle d'un modèle de robot (30) absolument exact décrivant seulement la déformation du robot industriel (R) et présentant des paramètres de robot, au moins un des paramètres du modèle absolument exact étant un paramètre de robot modifié, qui est modifié sur la base d'au moins un paramètre de composant du dispositif de fixation (40).

6.  Dispositif de commande de robot selon l'une des revendications 1 à 5, dont le modèle absolument exact est un modèle à ressorts (60) constitué par une multitude de ressorts modelés (31A-36A, 31B-31B, 31C-31D, 61, 62), et la déformation du robot industriel (R) et du dispositif de fixation (40), due à la position dudit au moins axe (11-16) et à la pesanteur, est modélisée par des déformations des ressorts (31A-36A, 31 B-31 B, 31C-31 D, 61, 62).

7.  Robot industriel comportant une commande de robot (21) selon l'une des revendications 1 à 6.

8.  Procédé d'obtention d'un modèle absolument exact pour la commande d'un robot industriel (R), présentant les étapes de procédé suivantes :

    - introduction de paramètres de robot décrivant la déformation d'un robot industriel (R) sur la base de la position de ses axes (11-16) de la pesanteur, dans un dispositif de commande de robot (21),
    - introduction d'au moins un paramètre de composant du dispositif de fixation (40) décrivant la déformation d'un composant, qui est un dispositif de fixation (40) relié robot industriel (R), sur la base de la position des axes (11-16) du robot industriel (R) et de la pesanteur, et
    - sur la base des paramètres de robot et de composant, établissement et utilisation algorithmique d'un modèle (60, 80) absolument exact qui modélise la déformation du robot industriel (R) et du dispositif de fixation (40) sur la base des positions des axes (11-16) du robot industriel (R) et de la pesanteur.

9.  Procédé selon la revendication 8, présentant additionnellement les étapes de procédé suivantes :

    - Etablissement d'un modèle de robot (30) absolu décrivant uniquement la déformation du robot industriel (R) sur la base des paramètres de robot introduits,
    - Etablissement d'un modèle de composant (61, 62, $m_L$) absolu décrivant la déformation du dispositif de fixation (40) sur la base dudit au moins un paramètre de composant introduit, et
    - Etablissement' le modèle absolument exact (60) en assemblant les modèles absolus de robot et de composant (30, 61, 62, $m_L$, 37).

10. Procédé selon la revendication 8, présentant additionnellement les étapes de procédé suivantes :

    - Etablissement un modèle de robot (30) absolument exact décrivant uniquement la déformation du robot industriel (R) sur la base des paramètres de robot et
    - Etablissement du modèle absolument exact en modifiant au moins un des paramètres de robot du modèle de robot (30) absolument exact sur la base dudit au moins un paramètre de composant.

11. Procédé d'obtention d'un modèle absolument exact pour la commande d'un robot industriel (R), présentant les étapes de procédé suivantes :

    - introduction d'au moins un paramètre de composant du dispositif de fixation (40) décrivant la déformation d'un dispositif de fixation (40) décrivant la déformation d'un composant, qui est un dispositif de fixation (40) relié au robot industriel (R), sur la base de la position des axes (11-16) du robot industriel (R) et de la pesanteur, et
    - établissement d'un modèle (60, 80) absolument exact qui modélise la déformation du robot industriel (R) et du dispositif de fixation (40) sur la base des positions des axes (11-16) du robot industriel (R) et de la pesanteur, sur la base d'un modèle de robot (30) absolument exact qui est mémorisé dans le dispositif de commande de robot (21) et qui décrit seulement la déformation du robot industriel (R) sur la base de la position de ses axes (11-16) et de la pesanteur.

12. Procédé selon l'une des revendications 11 dans lequel le modèle absolument exact est établi sur la base des étapes de procédé suivantes :

    - établissement d'un modèle de composant (61, 62, $m_L$) absolument exact décrivant la déformation du dispositif de fixation (40) sur la base dudit au moins paramètre de composant introduit, et
    - établissement du modèle (60) absolument exact en assemblant les modèles absolument exacts de rotor et de composant (30, 61, 62, $m_L$).

13. Procédé selon la revendication 11, dans lequel le modèle de robot (30) absolument exact comprend des paramètres de robot présentant la déformation du robot industriel (R), et le modèle absolument exact est établi en modifiant au moins un des paramètres de robot du modèle de robot (30) absolument exact sur la base dudit au moins un paramètre de composant.

14. Procédé selon l'une des revendications 8 à 13, dans lequel le modèle absolument exact est un modèle à ressorts (6) constitué par une multitude de ressorts modélisés (31A-36A, 31 B-31B, 31C-31D, 61, 62), et la déformation du robot industriel (R) et du dispositif de fixation (40), due à la position des axes (11-16) et à la pesanteur, est modélisée par déformations des ressorts (31A-36A, 31B-31B, 31C-31 D, 61, 62).

15. Procédé selon l'une des revendications 8 à 14, dans lequel le dispositif de fixation est une unité linéaire (40) qui est fixée en particulier à un plafond (D).

16. Dispositif selon la revendication 15, dans lequel la déformation de l'unité linéaire (40) dépend d'une position d'un chariot mobile (42) de l'unité linéaire (40), au moyen de laquelle le robot industriel (R, 70) peut être déplacé, et la dépendance de la déformation de l'unité linéaire (40), de la position du chariot mobile (42), est prise en compte pour le modèle absolu (60).

# FIG. 1

# FIG. 2

# FIG. 3

# FIG. 4

# FIG. 5

FIG. 6

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1612004 A2
- US 0262600 A1
- US 20060048364 A1